# EUROPEAN PATENT APPLICATION

(11) **EP 4 033 208 A2**
(43) Date of publication of application: **27.07.2022**
(21) Application number: 22173848.7
(22) Date of filing: 17.05.2022
(51) Int. Cl.: G01C 21/28

(54) **METHOD AND APPARATUS FOR CORRECTING POSITIONING INFORMATION, ELECTRONIC DEVICE AND STORAGE MEDIUM**

(30) Priority: 24.08.2021 CN 202110975183
(71) Applicant: BEIJING BAIDU NETCOM SCIENCE TECHNOLOGY CO., LTD., No. 10 Shangdi 10th Street Haidian District Beijing 100085 (CN)
(72) Inventor: CAI, Junjie, BEIJING, 100085 (CN); ZHONG, Kai, BEIJING, 100085 (CN); YANG, Jianzhong, BEIJING, 100085 (CN); LU, Zhen, BEIJING, 100085 (CN); ZHANG, Tongbin, BEIJING, 100085 (CN)
(74) Representative: Regimbeau

(57) **Abstract**

Provided are a method and apparatus for correcting positioning information, an electronic device and a storage medium, which relate to the field of artificial intelligence, in particular, to intelligent transportation technology and image processing technology. The specific implementation solution includes steps described below. A to-be-corrected image and positioning information of the to-be-corrected image are acquired (S101, S201, S301). A target candidate reference image matching the to-be-corrected image is selected (S102, S304) from candidate reference images having accurate positioning information. The positioning information of the to-be-corrected image is corrected (S103, S204, S305) according to accurate positioning information of the target candidate reference image. According to the solution of the present disclosure, the positioning information of the to-be-corrected image can be quickly corrected, and a guarantee is provided for accurately updating a navigation map by using the to-be-corrected image subsequently.

## Description

### TECHNICAL FIELD

The present disclosure relates to the field of artificial intelligence, in particular, to intelligent transportation technology and image processing technology and, specifically, to a method and apparatus for correcting positioning information, an electronic device, a storage medium and a computer program product.

### BACKGROUND

Navigation maps are indispensable tools for modern travel thanks to the frequent updating of real-life scenes, such as increasing new roads and building sites. Therefore, how to quickly and accurately update maps has become the key to whether navigation maps can provide accurate navigation services. The key to quickly and accurately updating navigation maps is how to quickly obtain accurate positioning data.

### SUMMARY

The present disclosure provides a method and apparatus for correcting positioning information, an electronic device, a storage medium and a computer program product.

According to an aspect of the present disclosure, a method for correcting positioning information is provided, which includes steps described below.

A to-be-corrected image and positioning information of the to-be-corrected image are acquired.

A target candidate reference image matching the to-be-corrected image is selected from at least one candidate reference image each having accurate positioning information.

The positioning information of the to-be-corrected image is corrected according to accurate positioning information of the target candidate reference image.

According to another aspect of the present disclosure, an apparatus for correcting positioning information is provided, which includes at least one processor; and a memory communicatively connected to the at least one processor.

The memory stores instructions executable by the at least one processor, and the instructions are executed by the at least one processor to cause the at least one processor to perform steps described below.

A to-be-corrected image and positioning information of the to-be-corrected image are acquired.

A target candidate reference image matching the to-be-corrected image is selected from at least one candidate reference image each having accurate positioning information.

The positioning information of the to-be-corrected image is corrected according to accurate positioning information of the target candidate reference image.

According to another aspect of the present disclosure, an electronic device is provided, which includes at least one processor and a memory communicatively connected to the at least one processor.

The memory stores instructions executable by the at least one processor, and the instructions are executed by the at least one processor to cause the at least one processor to execute the method for correcting positioning information of any embodiment of the present disclosure.

According to another aspect of the present disclosure, a non-transitory computer-readable storage medium is provided. The storage medium stores computer instructions for causing a computer to execute the method for correcting positioning information of any embodiment of the present disclosure.

According to another aspect of the present disclosure, a computer program product is provided. The computer program product includes a computer program which, when executed by a processor, causes the processor to implement the method for correcting positioning information of any embodiment of the present disclosure.

According to the technology of the present disclosure, the positioning information of the to-be-corrected image can be quickly corrected, and a guarantee is provided for accurately updating a navigation map by using the to-be-corrected image subsequently.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the solution and not to limit the present disclosure.
FIG. 1 is a flowchart of a method for correcting positioning information according to an embodiment of the present disclosure;
FIG. 2A is a flowchart of another method for correcting positioning information according to an embodiment of the present disclosure;
FIG. 2B is a schematic diagram of a flow of feature extraction performed on an image according to an embodiment of the present disclosure;
FIG. 3 is a flowchart of a method for correcting positioning information according to an embodiment of the present disclosure;
FIG. 4 is a structural diagram of an apparatus for correcting positioning information according to an embodiment of the present disclosure; and
FIG. 5 is a block diagram of an electronic device for implementing a method for correcting positioning information according to an embodiment of the present disclosure.

### DETAILED DESCRIPTION

Example embodiments of the present disclosure, including details of embodiments of the present disclosure, are described hereinafter in conjunction with the drawings to facilitate understanding. The example embodiments are merely illustrative. Therefore, it will be appreciated by those having ordinary skill in the art that various changes and modifications may be made to the embodiments described herein without departing from the scope and spirit of the present disclosure. Similarly, description of well-known functions and constructions is omitted hereinafter for clarity and conciseness.

In the embodiments of the present disclosure, a navigation map may be updated based on data (including image data, positioning information and collection time) collected by a high-precision measurement device, such as data collected by a high-precision map collection vehicle. However, such a high-precision measurement device is expensive, and map updating using the high-precision measurement device is usually performed every two years. Therefore, the high-precision measurement device is not suitable for frequent map updating throughout the country, that is, only using this high-precision measurement device for map updating will seriously affect the timeliness of the map updating. To ensure the timeliness of the map updating, data collected by a low-cost and poor-precision measurement device needs to be used, for example, a driving recorder device of a vehicle. However, the positioning information corresponding to the image data returned by the low-cost and poor-precision driving recorder device has relatively large error. If a map is updated directly according to the image data and the positioning information returned by the poor-precision measurement device, the map updating will be inaccurate. Therefore, to ensure the accuracy and timeliness of the map updating, it is necessary to correct the returned positioning information before updating the map with the image data and the positioning information returned by the poor-precision measurement device. For the specific correction process, reference may be made to embodiments below.

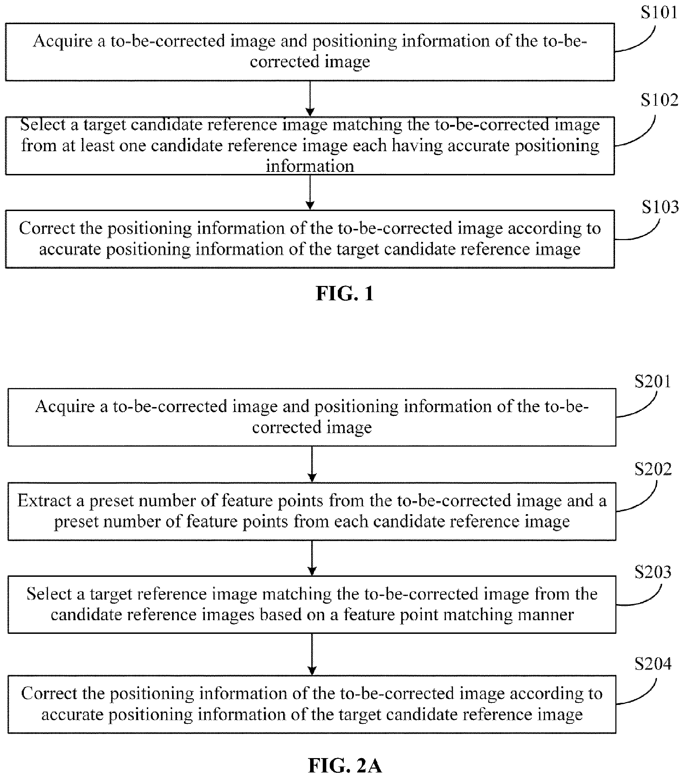

FIG. 1 is a flowchart of a method for correcting positioning information according to an embodiment of the present disclosure. The embodiment may be applied to the case where the positioning information returned by a low-precision measurement device is corrected by using an image matching method. The method may be executed by an apparatus for correcting positioning information implemented by means of software and/or hardware and integrated on an electronic device.

Specifically, referring to FIG. 1, the method for correcting positioning information is described below.

In S101, a to-be-corrected image and positioning information of the to-be-corrected image are acquired.

In the embodiment of the present disclosure, the to-be-corrected image refers to an image collected by a low-cost and poor-precision measurement device. Correspondingly, the positioning information of the to-be-corrected image refers to position information of the low-cost and poor-precision measurement device when collecting the to-be-corrected image. For example, the positioning information is Global Positioning System (GPS) coordinate information.

In S102, a target candidate reference image matching the to-be-corrected image is selected from at least one candidate reference image each having accurate positioning information.

In the embodiment of the present disclosure, a candidate reference image refers to an image that is historically collected by using a high-precision measurement device and has a positional deviation, which is less than a preset value, from the to-be-corrected image. The number of the candidate reference images may be one or more, and is generally more. Since the candidate reference images are collected by the high-precision measurement device, the accuracy of the positioning information of each candidate reference image is higher than the accuracy of the positioning information of the to-be-corrected image. Selecting the target candidate reference image matching the to-be-corrected image refers to selecting a target candidate reference image most similar to the to-be-corrected image from the candidate reference images. In an optional embodiment, the target candidate reference image having the highest similarity to the to-be-corrected image may be found based on an image matching technique.

In S103, the positioning information of the to-be-corrected image is corrected according to accurate positioning information of the target candidate reference image.

In the embodiment of the present disclosure, since the target candidate reference image has the highest similarity to the to-be-corrected image, the target candidate reference image and the to-be-corrected image theoretically are images of the same scene and collected at the same position, that is, the positioning information of the target candidate reference image is theoretically the same as the positioning information of the to-be-corrected image. However, the actually collected positioning information of the to-be-corrected image is different from the actually collected positioning information of the target candidate reference image. Since the accuracy of the positioning information of the to-be-corrected image is less than the accuracy of the positioning information of the target candidate reference image, the positioning information of the target candidate reference image may be considered to be more accurate, and the positioning information of the to-be-corrected image needs to be corrected according to the accurate positioning information of the target candidate reference image. During the specific correction, the positioning information of the target candidate reference image may be directly assigned to the to-be-corrected image.

Further, after the correction of the positioning information of the to-be-corrected image is completed, the navigation map may be directly updated by using the to-be-corrected image and the corrected positioning information of the to-be-corrected image, so that not only the timeliness of the map updating can be ensured, but also the accuracy of the map updating can be ensured.

In the embodiment of the present disclosure, after the target candidate reference image most similar to the to-be-corrected image is determined, the positioning information of the target candidate reference image having high accuracy is directly assigned to the to-be-corrected image having low accuracy, so as to quickly correct the positioning information of the to-be-corrected image.

FIG. 2A is a flowchart of another method for correcting positioning information according to an embodiment of the present disclosure. The embodiment is an optimization on the basis of the preceding embodiment. Referring to FIG. 2A, the method for correcting positioning information specifically includes steps described below.

In S201, a to-be-corrected image and positioning information of the to-be-corrected image are acquired.

In S202, a preset number of feature points are extracted from the to-be-corrected image and a preset number of feature points are also extracted from each candidate reference image.

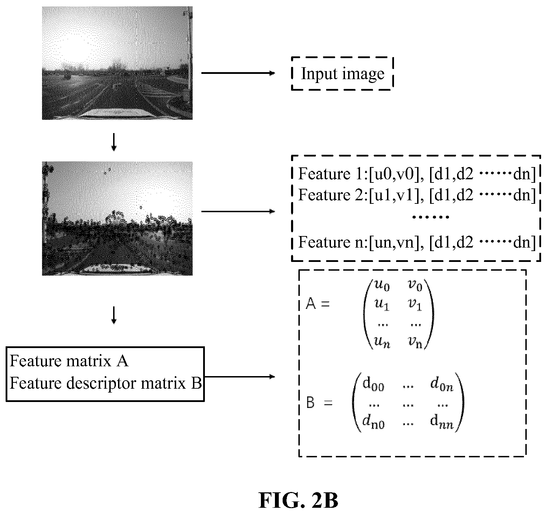

In an optional implementation, a pre-trained deep neural network model is used to perform feature extraction respectively on the to-be-corrected image and each candidate reference image. Exemplarily, referring to FIG. 2B, FIG. 2B shows a schematic diagram of feature extraction performed on an image. Specifically, the to-be-corrected image and each candidate reference image may be taken as an input image in turn, and image feature extraction is performed on the input image through the deep neural network model. For example, a preset number of feature points are extracted from each input image. It is to be noted that each feature point is composed of two parts, that is, a position (u, v) of the feature point in the input image and a descriptor d of the feature point, and the descriptor d is used for describing the feature of the feature point. For each input image, a feature matrix A composed of positions of feature points and a feature descriptor matrix B composed of descriptors are generated according to the extracted feature points.

In S203, a target reference image matching the to-be-corrected image is selected from the candidate reference images based on a feature point matching manner.

In the embodiment of the present disclosure, based on the feature point matching manner, feature matching is performed on the to-be-corrected image and each candidate reference image in turn to find a target candidate reference image most similar to the to-be-corrected image. It is to be noted that the target candidate reference image having the highest similarity to the to-be-corrected image can be quickly found from the candidate reference images in the feature point matching manner.

In an optional implementation, the process of determining the target candidate reference image includes four steps A to D. Step A belongs to the process of rough feature matching, which is mainly implemented by matching the descriptor extracted from the to-be-corrected image with descriptors extracted from the candidate reference images. Steps B to D belong to the process of fine feature matching, which filters matched feature points extracted in step A in consideration of positions of the feature points. Detailed steps are described below.

In step A, the number of matched feature points between the to-be-corrected image and each candidate reference image is determined based on the feature point matching manner, and a candidate reference image whose number of matched feature points is greater than a threshold is taken as an initial candidate reference image.

In the embodiment of the present disclosure, to speed up the process of determining the number of matched feature points between the to-be-corrected image and each candidate reference image, a k-dimensional tree (k-d tree) structure may be introduced, and a k-d tree index structure is pre-constructed based on feature points of the to-be-corrected image. For example, a k-d tree index structure is constructed based on feature descriptors of the to-be-corrected image. Then, when the number of matched feature points between the to-be-corrected image and any candidate reference image is determined, for any candidate feature point of the any candidate reference image, a target feature point matching the any candidate feature point of the any candidate reference image is found in the k-d tree index structure, and then the similarity between the any candidate feature point and the target feature point is calculated. For example, the Euclidean distance between two feature points is calculated, feature points the distance between whom is greater than or equal to a similarity threshold are retained, and feature points the distance between whom is less than the similarity threshold are eliminated. In this way, the number of matched feature points between the to-be-corrected image and each candidate reference image can be quickly determined. It is to be noted that the larger the number of matched feature points between the to-be-corrected image and the candidate reference image, the more similar the to-be-corrected image and the candidate reference image.

Further, candidate reference images whose number of matched feature points is greater than a preset number threshold are filtered out as initial candidate reference images so as to perform subsequent fine feature matching. An image sequence composed of the initial candidate reference images is exemplarily {I1, 12,13, ..., In}, and the purpose of the fine matching is mainly to eliminate feature points obtained by the rough matching that have similar features but have an excessive positional deviation in the image.

In step B, an image pair set is generated according to the initial candidate reference image and the to-be-corrected image, where each image pair is composed of the to-be-corrected image and one initial candidate reference image.

Exemplarily, the to-be-corrected image is I, and the generated image pair set is {<I, I1>, <1, 12>, ..., <1, In>}.

In step C, for any image pair, matched feature points between the to-be-corrected image and an initial candidate reference image are filtered based on a random sample consensus (RANSAC) algorithm to determine the final number of matched feature points.

For any image pair, such as <I, I1>, the process of filtering matched feature points between the to-be-corrected image I and the initial candidate reference image 11 based on the random sample consensus (RANSAC) algorithm includes two steps C1 and C2.

In step C1, steps described below are repeated M times (such 100 times). n feature points are randomly sampled from the to-be-corrected image I; a model is fitted (such as a rigid model) on the n feature points; the distance between each feature point in the initial candidate reference image 11 and the fitted model is calculated; feature points whose distance from the fitted model is greater than a threshold are filtered out as outliers, and the number of feature points (that is, inliers) whose distance from the fitted model is less than the threshold is counted. It is to be noted that the value of n is different for each time of random sampling, and the value of n may gradually increase with the number of sampling times.

In step C2, during the M times of execution, if the number of inliers in a certain time (for example, the 50th time) is counted to be the largest, the number of inliers counted in this time (that is, the 50th time) is used as the final number of matched feature points between the to-be-corrected image I and the initial candidate reference image I1.In this way, each image pair thus corresponds to a final number of matched feature points after the two steps C1 and C2.

In step D, a target image pair is selected according to the final number of matched feature points separately corresponding to the each image pair, and an initial candidate reference image included in the target image pair is taken as the target candidate reference image.

Optionally, image pairs are sequenced according to the final number of matched feature points of each image pair, and the image pair having the largest number of matched feature points is taken as the target image pair. Exemplarily, four image pairs exist in total, the final number of matched feature points of the image pair <I, I₁> is 500, the final number of matched feature points of the image pair <I, I₂> is 600, the final number of matched feature points of the image pair <I, I₃> is 550, and the final number of matched feature points of the image pair <I, I₄> is 700. The image pair <I, I₄> is then taken as the target image pair, and the initial candidate reference image I₄ is taken as the target candidate reference image.

In S204, the positioning information of the to-be-corrected image is corrected according to accurate positioning information of the target candidate reference image.

Optionally, the positioning information of the target candidate reference image is directly assigned to the to-be-corrected image to correct the positioning information of the to-be-corrected image.

In the embodiment of the present disclosure, through two stages of feature matching, that is, the rough feature matching and the fine feature matching, the target candidate reference image most similar to the to-be-corrected image can be accurately found, so that the accuracy of positioning information correction and subsequent accurate navigation map updating are ensured.

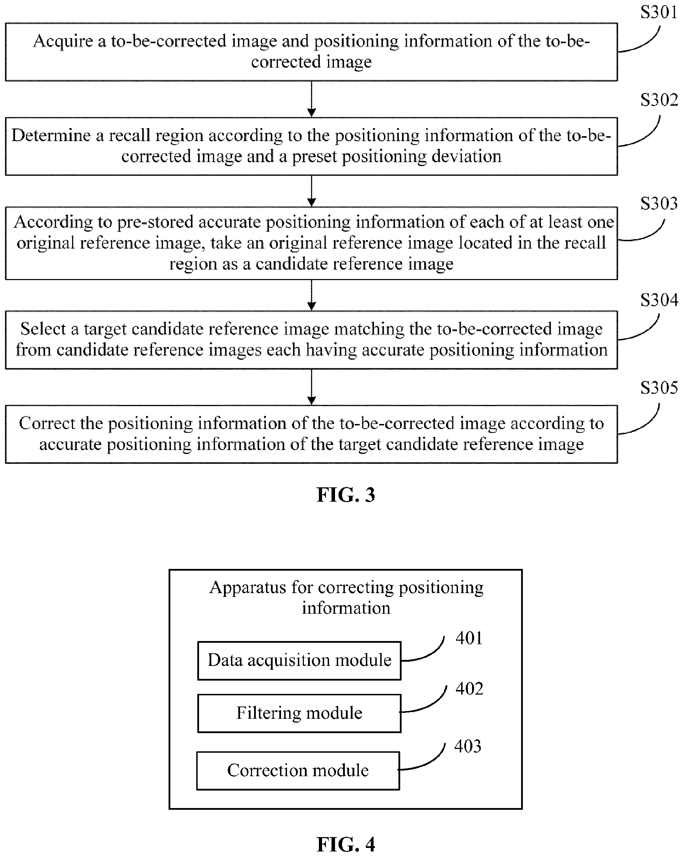

FIG. 3 is a flowchart of another method for correcting positioning information according to an embodiment of the present disclosure. The embodiment is an optimization on the basis of the preceding embodiments. Referring to FIG. 3, the method for correcting positioning information specifically includes steps described below.

In S301, a to-be-corrected image and positioning information of the to-be-corrected image are acquired.

In the embodiment of the present disclosure, in addition to acquiring the to-be-corrected image and the positioning information of the to-be-corrected image, collection time corresponding to the to-be-corrected image is also acquired so as to subsequently determine a candidate reference image in combination with the collection time.

In S302, a recall region is determined according to the positioning information of the to-be-corrected image and a preset positioning deviation.

The positioning deviation may be determined according to the precision of a measurement device. For example, the positioning deviation is 100 meters. When the recall region is determined, the positioning information (such as GPS coordinates) of the to-be-corrected image may be taken as an origin, a circle is drawn with the positioning deviation as the radius, and then the region surrounded by the circle is the determined recall region.

In S303, according to pre-stored accurate positioning information of each of at least one original reference image, an original reference image located in the recall region is taken as a candidate reference image.

In the embodiment of the present disclosure, the original reference images refer to an image historically collected by using a high-precision measurement device. It is to be noted that the number of the original reference images may be one or more and generally is more; and the data (including image data, positioning data and time data) historically collected by the high-precision measurement device is pre-stored in a database. Specifically, a table is established in the database including a name, a longitude, a latitude and collection time of an image, and each row in the database represents the name, the collection time and the longitude and latitude (that is, the positioning information) corresponding to the image in the collected data. Therefore, all original reference images in the recalled region and positioning information thereof can be determined from this table.

In the embodiment of the present disclosure, to ensure the accuracy of the determined candidate reference image, it is also necessary to ensure that the collection time difference between the to-be-corrected image and the original reference image is less than a preset time threshold. For example, the collection time difference between the to-be-corrected image and the original reference image does not exceed two years.

In S304, a target candidate reference image matching the to-be-corrected image is selected from candidate reference images each having accurate positioning information.

In S305, the positioning information of the to-be-corrected image is corrected according to accurate positioning information of the target candidate reference image.

In the embodiment of the present disclosure, according to the determined recall region and the collection time difference, candidate reference images around the collection position corresponding to the to-be-corrected image can be accurately recalled, so as to avoid matching the to-be-corrected image with all images in the database and ensure the efficiency of determining the target candidate reference image most similar to the to-be-corrected image.

FIG. 4 is a structural diagram of an apparatus for correcting positioning information according to an embodiment of the present disclosure. The embodiment may be applied to the case where the positioning information returned by a low-precision measurement device is corrected by using an image matching method. As shown in FIG. 4, the apparatus specifically includes a data acquisition module 401, a filtering module 402 and a correction module 404.

The data acquisition module 401 is configured to acquire a to-be-corrected image and positioning information of the to-be-corrected image.

The filtering module 402 is configured to select a target candidate reference image matching the to-be-corrected image from candidate reference images having accurate positioning information.

The correction module 403 is configured to correct the positioning information of the to-be-corrected image according to accurate positioning information of the target candidate reference image.

Based on the preceding embodiments, optionally, the filtering module includes a feature extraction unit and a feature matching unit.

The feature extraction unit is configured to extract a preset number of feature points respectively from the to-be-corrected image and the candidate reference images.

The feature matching unit is configured to select the target reference image matching the to-be-corrected image from the candidate reference images based on a feature point matching manner.

Based on the preceding embodiments, optionally, the feature matching module is configured to perform steps described below.

A number of matched feature points between the to-be-corrected image and each of the candidate reference images is determined based on the feature point matching manner, and a candidate reference image whose number of matched feature points is greater than a threshold is taken as an initial candidate reference image.

An image pair set is generated according to the initial candidate reference image and the to-be-corrected image, where each image pair is composed of the to-be-corrected image and one of the initial candidate reference image.

For any one of the each image pair, matched feature points between the to-be-corrected image and an initial candidate reference image are filtered based on a random sample consensus algorithm to determine a final number of matched feature points.

A target image pair is selected according to a final number of matched feature points separately corresponding to the each image pair, and an initial candidate reference image included in the target image pair is taken as the target candidate reference image.

Based on the preceding embodiments, optionally, the apparatus further includes a recall region determination module and a first filtering module.

The recall region determination module is configured to determine a recall region according to the positioning information of the to-be-corrected image and a preset positioning deviation.

The first filtering module is configured to take an original reference image located in the recall region as a candidate reference image according to pre-stored accurate positioning information of the original reference image.

Based on the preceding embodiments, optionally, accuracy of the positioning information of the to-be-corrected image is less than accuracy of positioning information of the candidate reference images.

The apparatus for correcting positioning information provided by the embodiment of the present disclosure may execute the method for correcting positioning information according to any embodiment of the present disclosure, and has functional modules and beneficial effects corresponding to the execution method. For content not described in detail in the embodiment, reference may be made to the description in any method embodiment of the present disclosure.

In the technical solutions in the present disclosure, acquisition, storage and application of user personal information involved are in compliance with relevant laws and regulations and do not violate public order and good custom.

According to the embodiments of the present disclosure, the present disclosure further provides an electronic device, a readable storage medium and a computer program product.

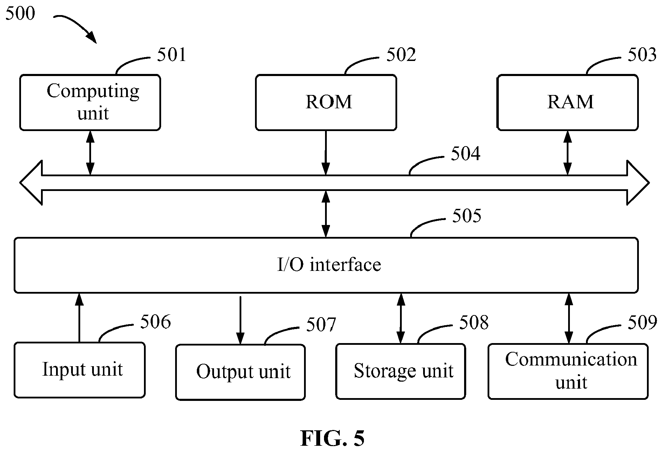

FIG. 5 is a block diagram of an exemplary electronic device 500 that may be configured to implement the embodiments of the present disclosure. The electronic device is intended to represent various forms of digital computers, for example, a laptop computer, a desktop computer, a worktable, a personal digital assistant, a server, a blade server, a mainframe computer or another applicable computer. The electronic device may also represent various forms of mobile devices, for example, a personal digital assistant, a cellphone, a smartphone, a wearable device or another similar computing device. Herein the shown components, the connections and relationships between these components, and the functions of these components are illustrative only and are not intended to limit the implementation of the present disclosure as described and/or claimed herein.

As shown in FIG. 5, the device 500 includes a computing unit 501. The computing unit 501 may perform various types of appropriate operations and processing based on a computer program stored in a read-only memory (ROM) 502 or a computer program loaded from a storage unit 508 to a random-access memory (RAM) 503.Various programs and data required for operations of the device 500 may also be stored in the RAM 503.The computing unit 501, the ROM 502 and the RAM 503 are connected to each other through a bus 504.An input/output (I/O) interface 505 is also connected to the bus 504.

Multiple components in the device 500 are connected to the I/O interface 505. The components include an input unit 506 such as a keyboard and a mouse, an output unit 507 such as various types of displays and speakers, the storage unit 508 such as a magnetic disk and an optical disc, and a communication unit 509 such as a network card, a modem and a wireless communication transceiver. The communication unit 509 allows the device 500 to exchange information/data with other devices over a computer network such as the Internet and/or various telecommunications networks.

The computing unit 501 may be various general-purpose and/or special-purpose processing components having processing and computing capabilities. Examples of the computing unit 501 include, but are not limited to, a central processing unit (CPU), a graphics processing unit (GPU), a special-purpose artificial intelligence (AI) computing chip, a computing unit executing machine learning models and algorithms, a digital signal processor (DSP) and any appropriate processor, controller and microcontroller. The computing unit 501 executes various methods and processing described above, such as the method for correcting positioning information. For example, in some embodiments, the method for correcting positioning information may be implemented as computer software programs tangibly contained in a machine-readable medium such as the storage unit 508. In some embodiments, part or all of computer programs may be loaded and/or installed on the device 500 via the ROM 502 and/or the communication unit 509. When the computer programs are loaded to the RAM 503 and executed by the computing unit 501, one or more steps of the preceding method for correcting positioning information may be executed. Alternatively, in other embodiments, the computing unit 501 may be configured, in any other suitable manner (for example, by means of firmware), to execute the method for correcting positioning information.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SOCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting the data and instructions to the memory system, the at least one input device and the at least one output device.

Program codes for implementing the methods of the present disclosure may be compiled in any combination of one or more programming languages. The program codes may be provided for the processor or controller of a general-purpose computer, a special-purpose computer, or another programmable data processing apparatus to enable functions/operations specified in flowcharts and/or block diagrams to be implemented when the program codes are executed by the processor or controller. The program codes may be executed in whole on a machine, executed in part on a machine, executed, as a stand-alone software package, in part on a machine and in part on a remote machine, or executed in whole on a remote machine or a server.

In the context of the present disclosure, a machine-readable medium may be a tangible medium that may include or store a program that is used by or in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical memory device, a magnetic memory device or any suitable combination thereof.

In order that interaction with a user is provided, the systems and techniques described herein may be implemented on a computer. The computer has a display apparatus (for example, a cathode-ray tube (CRT) or a liquid-crystal display (LCD) monitor) for displaying information to the user and a keyboard and a pointing apparatus (for example, a mouse or a trackball) through which the user can provide input to the computer. Other types of apparatuses may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network).Examples of the communication network include a local area network (LAN), a wide area network (WAN) and the Internet.

The computing system may include clients and servers. The clients and servers are usually far away from each other and generally interact through the communication network. The relationship between the clients and the servers arises by virtue of computer programs running on respective computers and having a client-server relationship to each other. The server may be a cloud server, a server of a distributed system or a server combined with a blockchain.

It is to be understood that various forms of the preceding flows may be used with steps reordered, added or removed. For example, the steps described in the present disclosure may be executed in parallel, in sequence or in a different order as long as the desired result of the technical solutions disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made according to design requirements and other factors. Any modification, equivalent substitution, improvement and the like made within the spirit and principle of the present disclosure falls within the scope of the present disclosure.

## Claims

**1.** A method for correcting positioning information, comprising:
acquiring (S101, S201, S301) a to-be-corrected image and positioning information of the to-be-corrected image;
selecting (S102, S304) a target candidate reference image matching the to-be-corrected image from at least one candidate reference image each having accurate positioning information; and
correcting (S103, S204, S305) the positioning information of the to-be-corrected image according to accurate positioning information of the target candidate reference image.

**2.** The method according to claim 1, wherein selecting (S102) the target candidate reference image matching the to-be-corrected image from the at least one candidate reference image each having the accurate positioning information comprises:
extracting (S202) a preset number of feature points from the to-be-corrected image and a preset number of feature points from each of the at least one the candidate reference image; and
selecting (S203) the target reference image matching the to-be-corrected image from the at least one candidate reference image based on a feature point matching manner.

**3.** The method according to claim 2, wherein selecting the target reference image matching the to-be-corrected image from the at least one candidate reference image based on the feature point matching manner comprises:
determining, based on the feature point matching manner, a number of matched feature points between the feature points extracted from the to-be-corrected image and the feature points extracted from each of the at least one candidate reference image to determine at least one initial candidate reference image, wherein each of the at least one initial candidate reference image is a candidate reference image whose number of matched feature points is greater than a threshold;
generating an image pair set according to the at least one initial candidate reference image and the to-be-corrected image, wherein each of at least one image pair in the image pair set is composed of the to-be-corrected image and a corresponding one of the at least one initial candidate reference image;
for any one of the at least one image pair, filtering the matched feature points based on a random sample consensus, RANSAC, algorithm to determine a final number of matched feature points; and
for any one of the at least one image pair, selecting a target image pair from the image pair set according to the final number of the matched feature points, and taking an initial candidate reference image included in the target image pair as the target candidate reference image.

**4.** The method according to claim 1, before selecting (S102, S304) the target candidate reference image matching the to-be-corrected image from the at least one candidate reference image each having the accurate positioning information, further comprising:
determining (S302) a recall region according to the positioning information of the to-be-corrected image and a preset positioning deviation; and
according to pre-stored accurate positioning information of each of at least one original reference image, taking (S303) an original reference image located in the recall region as the at least one candidate reference image.

**5.** The method according to any one of claims 1 to 4, wherein accuracy of the positioning information of the to-be-corrected image is less than accuracy of the accurate positioning information of each of the at least one candidate reference image.

**6.** An apparatus for correcting positioning information, comprising:
a data acquisition module (401), which is configured to acquire a to-be-corrected image and positioning information of the to-be-corrected image;
a filtering module (402), which is configured to select a target candidate reference image matching the to-be-corrected image from at least one candidate reference image each having accurate positioning information; and
a correction module (403), which is configured to correct the positioning information of the to-be-corrected image according to accurate positioning information of the target candidate reference image.7. The apparatus according to claim 6, wherein the filtering module (402) comprises:
a feature extraction unit, which is configured to extract a preset number of feature points from the to-be-corrected image and a preset number of feature points from each of the at least one candidate reference image; and
a feature matching unit, which is configured to select the target reference image matching the to-be-corrected image from the at least one candidate reference image based on a feature point matching manner.

**8.** The apparatus according to claim 7, wherein the feature matching module is configured to:
determine, based on the feature point matching manner, a number of matched feature points between the feature points extracted from the to-be-corrected image and the feature points extracted from each of the at least one candidate reference image to determine at least one initial candidate reference image, and wherein each of the at least one initial candidate reference image is a candidate reference image whose number of matched feature points is greater than a threshold;
generate an image pair set according to the at least one initial candidate reference image and the to-be-corrected image, wherein each of at least one image pair in the image pair set is composed of the to-be-corrected image and a corresponding one of the at least one initial candidate reference image;
for any one of the at least one image pair, filter the matched feature points based on a random sample consensus, RANSAC, algorithm to determine a final number of the matched feature points; and
for any one of the at least one image pair, select a target image pair from the image pair set according to the final number of the matched feature points, and take an initial candidate reference image included in the target image pair as the target candidate reference image.

**9.** The apparatus according to claim 6, further comprising:
a recall region determination module, which is configured to determine a recall region according to the positioning information of the to-be-corrected image and a preset positioning deviation; and
a first filtering module, which is configured to according to pre-stored accurate positioning information of each of at least one original reference image, take an original reference image located in the recall region as the at least one candidate reference image.

**10.** The apparatus according to any one of claims 6 to 9, wherein accuracy of the positioning information of the to-be-corrected image is less than accuracy of positioning information of each of the at least one candidate reference image.

**11.** An electronic device, comprising:
at least one processor; and
a memory communicatively connected to the at least one processor, wherein
the memory stores instructions executable by the at least one processor, and the instructions are executed by the at least one processor to cause the at least one processor to execute the method of any one of claims 1 to 5.

**12.** A computer-readable storage medium storing computer instructions for causing a computer to:
acquire a to-be-corrected image and positioning information of the to-be-corrected image;
select a target candidate reference image matching the to-be-corrected image from at least one candidate reference image each having accurate positioning information; and
correct the positioning information of the to-be-corrected image according to accurate positioning information of the target candidate reference image.

**13.** A computer program product, comprising a computer program which, when executed by a processor, implements the method of any one of claims 1 to 5.
